# EUROPEAN PATENT SPECIFICATION

(11) **EP 0 593 591 B1**
(45) Date of publication and mention of the grant of the patent: **09.04.1997**
(21) Application number: 92914620.7
(22) Date of filing: 29.06.1992
(51) Int. Cl.: C22C 29/06, C04B 41/51

(54) **BORON CARBIDE-COPPER CERMETS AND METHOD FOR MAKING SAME**
BORKARBID-KUPFER CERMETS UND VERFAHREN ZU IHRER HERSTELLUNG
CERMETS EN CARBURE DE BORE-CUIVRE ET LEUR PROCEDE DE PRODUCTION

(30) Priority: 08.07.1991 US 726448
(43) Date of publication of application: 27.04.1994
(73) Proprietor: THE DOW CHEMICAL COMPANY, Midland, Michigan 48640 (US)
(72) Inventor: PYZIK, Aleksander, J., Midland, MI 48640 (US); NILSSON, Robert, T., Cedar, MI 46921 (US)
(74) Representative: Burford, Anthony Frederick
(86) International application number: PCT/US92/05542
(87) International publication number: WO 93/01324

(56) References cited:
- EP-A- 0 108 281
- EP-A- 0 370 546
- EP-A- 0 426 608
- WO-A-90/08612
- Week 7352, Derwent Publications Ltd., London, GB; AN 73-80903U & JP-B-48 042 762 (HITACHI LTD)

## Description

The invention relates to ceramic-metal compositions or cermets of boron or zirconium carbide and copper. More particularly, the invention relates to densified cermets of B₄C and Cu that have selected desirable characteristics derived from having a predominate ceramic component.

The potential of cermets that include a unique combination of properties, such as the hardness of a ceramic material combined with the ductility of a metal, has long been of interest. It has, however, proved difficult to achieve cermet compositions of many desirable materials that are fully densified and have a particularly desired range of properties. The difficulties arise form the conflicting physical and chemical nature of the starting materials.

Major areas of difficulties in processing of ceramic-metal composites are associated with two phenomena. First, chemical reactions of the starting materials, such as oxidation, other reactions or both, lead to metal depletion and formation of undesirable phases between ceramic and metal. Second, some metals exhibit a non-wetting behavior of the metal with respect to the ceramic component. These difficulties lead to cermet products that have a higher porosity than desired and lack desired ceramic-metal phases that would, If present, impart needed properties to the cermet.

Where the metal chosen for the cermet composition is, for example, non-reactive and non-wetting, such as copper in a boron carbide ceramic phase, there is serious difficulty in achieving a fully dense cermet that is high in ceramic content. The difficulties in manufacturing B₄C/Cu cermets are associated with the non-wetting characteristics of Cu for B₄C. If, in making a B₄C/Cu cermet, the reaction mixture is heated above the Cu metal melting temperature, a conventional processing step in densifying composite compositions, Cu forms spheres that separate from the mixture of ceramic and metal particles. In addition, where a high ceramic content is desired and the particle size of the ceramic component is reduced toward that object, the finer the ceramic particles and the greater the ceramic content of the mixture, the more metal migrates out of the bulk mixture towards the surface of a porous compact of the ceramic. Obtaining high ceramic content cermets of high density using materials such as boron carbide and copper has heretofore proved substantially impossible. Heating even to high temperatures does not improve densification because the wetting of B₄C by Cu is not a function of temperature. This is in contrast to an aluminum-boron carbide system, for example, wherein the metal wets the ceramic and can infiltrate into a porous ceramic compact system. When a non-wetting metal melts, the system tends to separate and becomes uncontrollable with respect to densification.

Therefore, all prior work with the B₄C/Cu system has been conducted below the melting temperature of Cu in order to densify cermets. Below the metal melting point, a metal component must be physically deformed and forced into the small channels between the ceramic grains of a ceramic body. The smaller the ceramic grains, the smaller are the channels between the grains and, as a result, the more difficult it is to sufficiently deform the metal to achieve a dense cermet structure. As a consequence, the maximum amount of ceramic and the minimum particle size that can be employed in making B₄C-Cu cermets has heretofore been limited. Keil, et al., in "A Feasibility Study for Fabrication of Cu-B₄C Sheet", LA-357O-MS, Los Alamos Scientific Laboratories, Los Alamos (1965), describes producing 2.5 mm thick sheets of 50 volume percent B₄C/Cu by means of a process combining vacuum hot pressing and hot rolling.

Smugersky, et al., in "Development of B₄C/Cu Cermets", Sandia Laboratories 78-2317, TTC/0017 (1978) utilized a hot isostatic pressing technique to make B₄C/Cu cermets, pressing at 103 MPa and 500°C for three hours. Their experiments indicated that full density could be obtained only if the total B₄C ceramic component content was below 60 volume percent. Densities of 97.5 percent and 88.2 percent were obtained with B₄C contents of 70 and 80 volume percent, respectively, but at greatly reduced strength. In these experiments, a coarse B₄C powder, greater than 44 micrometers average particle size, was required and attempts to use finer B₄C powder led to cermets of high porosity. The bending strength produced in the Sandia experiments, in terms of transverse rupture strength, were 40 and 56 percent lower, for the 70 and 80 volume percent material, respectively, than the 87 MPa achieved for the 60 percent cermet. According to the work done in Sandia, the maximum content of B₄C in B₄C/Cu cermets has been limited to less than 60 volume percent with a minimum B₄C grain size of 44 micrometers.

For ceramic-metal systems that are non-reactive and/or non-wetting, such as boron carbide and copper, it would be desirable to produce ceramic-metal compositions having a greater than 60 volume percent ceramic content, in order to provide densified cermet compositions that include ceramic and metal characteristics that are advantageous for many uses.

WO-A-90/08612 generally discloses B₄C-Cu cermets prepared by applying pressure at elevated temperature to a green compact formed by mixing copper particles with particles of B₄C having a nickel coating. In the only exemplification of B₄C-Cu cermets (Example 4), B₄C powder of 15 to 25 micrometers size was coated with nickel by electroless deposition and then mixed with copper metal. The resultant greenware was heated to 1025°C and then dynamically compacted at 120 kpsi (825 MPa) in a glass pressure-transmitting medium to 94% density. The nickel coating permitted good wetting of the ceramic particles with copper. In the absence of nickel, a final density of only 74% was achieved.

The invention is a densified ceramic-metal composition or cermet comprising: a ceramic phase that (a) is (i) B₄C or (ii) ZrC and (b) constitutes at least 60 percent by volume of said composition; and a copper metal phase that permeates said ceramic phase, wherein said composition is substantially fully densified and said copper metal is non-reactive and non-wetting of said ceramic phase. Preferably, the ceramic phase constitutes 70 to 90 volume percent of said composition.

The composition of the invention includes ceramic phases of B₄C or ZrC. The ceramic phase is preferably B₄C in a particulate form of any size, but preferably having a particle size of less than 44 micrometers.

The ceramic phase is preferably in the form of a porous body or article prior to permeating and densifying with said copper metal. An unfired porous greenware is employed when it is desired that the ceramic phase, after densifying with copper, have a microstructure characterized by isolated structures surrounded by continuous metal. A sintered porous article is formed if it is desired that the ceramic phase, after densifying with copper, have a microstructure characterized as a continuous ceramic structure or skeleton surrounding said metal. When the ceramic phase is B₄C, the densified cermet has a ceramic phase grain size of 3 micrometers or less.

When the composition has a B₄C ceramic phase that occupies 70 to 90 volume percent of said composition and a metal phase, Cu, that occupies 30 to 10 volume percent of said composition, both percentages totaling 100 percent, is densified to substantially 100 percent of theoretical density, the composition has a flexure strength within a range of from 350 MPa to 725 MPa and a fracture toughness greater than 4.5 MPa·m^{½}.

The invention also includes process for making a densified ceramic-metal composition comprising:
forming a porous body from a particulate ceramic powder selected from (i) B₄C or (ii) ZrC in an amount sufficient to constitute at least 60 percent by volume of said composition;
contacting said porous body with a metal that is copper or copper alloy having a copper content of greater than 50% by weight, based upon alloy weight;
heating said porous body and metal to a temperature that liquefies said metal, but is below the temperature at which said metal wets said ceramic; and
applying pressure to said liquefied metal such that said metal is forced into, and substantially completely fills, the pores of said porous body and said ceramic-metal composition is substantially fully densified.

An advantage of applying external force to the liquefied metal is that lower temperatures are required to densify the compositions of the invention than would be required in the absence of pressure. Preferably, pressures in excess of 200 MPa are employed.

The ceramic-metal, or cermet, composition of the invention includes a copper metal component or phase and a high ceramic component or phase content. The cermet is characterized by high hardness with respect to cermets of the prior art, while maintaining desirable fracture toughness and flexural strength.

The ceramic component or phase is B₄C or ZrC. The preferred ceramic component of the composition of the invention is B₄C, a material characterized by high hardness and superior wear resistance.

The copper metal component or phase of the composition of the invention is principally Cu and is selected, in general, to impart toughness or ductility to the ceramic material, as well as thermal and electrical conductivity. The term "principally Cu" includes copper and copper metal alloys having a copper content of greater than 50% by weight, based upon alloy weight. The particular copper metal alloy component selected is non-reactive with the ceramic phase, such as B₄C, where, for example, high electrical conductivity of the densified product is of interest. For such a product quality, a desired characteristic of the densified cermet is that there is no change in chemical composition during periods of prolonged heating after densification. Another nonreactive system similar to B₄C-Cu is ZrC-Cu.

The invention provides a process for producing the above-described cermets of the invention. These cermets are characterized by a high ceramic phase content. The process first requires forming a porous compact, preform or greenware article from a particulate ceramic. In general, a fine ceramic powder, preferably having a particle diameter size range of 0.1 to 10 micrometers is utilized. The particulate material is either dry mixed or dispersed in a liquid and then consolidated by conventional means to form the porous green body. Where it is desired that the densified composite be characterized as a substantially continuous ceramic structure or skeleton surrounding metal islands, it is desirable to next sinter the porous greenware. Preferably, the greenware is sintered to achieve a ceramic content above 70 volume percent. Where the ceramic is B₄C, the greenware is sintered at 2000°C or higher to form porous compacts or preforms having densities ranging from greater than 70 to 90 percent of theoretical density.

The process then requires that the greenware or sintered porous preform or article be placed in contact with the selected copper metal component of the cermet and heated to at least the liquification temperature of the metal. Heating may take place in a vacuum or under an inert gas. The metal placed in contact with the porous body prior to liquification may be in the form of a powder or solid bars or chips or any other suitable form.

Pressure is then applied to the liquid metal such that the metal is pushed into the porous body structure of the greenware or porous compact. Generally, any pressure technique that exerts a pressure of at least 200 MPa on the metal is suitable.

For the B₄C-Cu cermet system, flexure strengths exceeding 2-5 times those of the best previously made B₄C/Cu cermets have unexpectedly been achieved.

The following Examples exemplify the invention.

### Example 1

B₄C (ESK specification 1500 manufactured by Elektroschemeltzwerk Kempten of Munich, Germany and having an average particulate size of 3 micrometers) powder was dispersed in water at pH 7.0. The suspension was cast on a plaster of Paris mold to form a porous ceramic body having a density of 63 volume percent of theoretical (100%) density. The B₄C greenware was dried for 24 hours at 105°C and then sintered at 2250°C for 30 minutes in a graphite element furnace to a density of 87 percent of theoretical.

Next, copper was placed on the top of the sintered greenware and the combination was placed in a graphite can and heated. When the temperature of the assembly approached 1100°C, a pressure of 830 MPa (120,000 psi) was applied forcing the Cu metal into the porous B₄C body. The resulting B₄C/Cu cermet was characterized by a density of 100 percent of the theoretical (3.8 g/cm³), a hardness of 1556 kg/mm², a flexure strength of 352 MPa and fracture toughness of 6.62 MPa·m^{½}. In comparison, a flexure strength of 40 MPa was reported by Smugersky, et al., cited above for the similar composition.

### Example 2

B₄C powder was dispersed and formed into a greenware compact preform as described in Example 1. The greenware B₄C preform, containing about 79 volume percent of B₄C, was filled with metal in the manner described in Example 1. The resulting B₄C/Cu cermet was characterized by full density, a hardness of 1500 kg/mm² and a flexure strength of 725 MPa. The cermet had a fracture toughness of 4.53 MPa·m^{½}, in comparison with a fracture toughness of B₄C of about 3 MPa·m½. The microstructure of the cermet was characterized by Cu forming a continuous metal phase distributed uniformly throughout the cermet.

### Example 3

A sintered preform of B₄C was made as described in Example 1 such that the preform was 70 volume percent B₄C. The preform was then infiltrated with Cu by the application of pressure, also as described in Example 1. The resulting B₄C/Cu cermet was fully densified and characterized by a flexure strength of 503 MPa, a fracture toughness of 7.25 MPa·m^{½} and a hardness of 1525 kg/mm².

### Example 4

A ceramic-metal composite of 80 volume percent B₄C and 20 volume percent Cu was made in accord with Example 1. The fully densified cermet was characterized by a fracture toughness of 6.62 MPa·m^{½} and a flexure strength of 425 MPa.

## Claims

1. A densified ceramic-metal composition, comprising:
a ceramic phase that (a) is (i) B₄C or (ii) ZrC and (b) constitutes at least 60 percent by volume of said composition; and
a copper metal phase that permeates said ceramic phase,
wherein said composition is substantially fully densified and said copper metal is non-reactive and nonwetting of said ceramic phase.

2. A composition as claimed in Claim 1, wherein said ceramic phase constitutes an amount within a range of from 70 to 90 percent by volume of said composition.

3. A composition as claimed in Claim 1 or Claim 2, wherein said ceramic phase is B₄C.

4. A composition as claimed in Claim 3, wherein said B₄C is in a particulate form having a particle size of less than 44 micrometers.

5. A composition as claimed in Claim 3 or Claim 4, wherein the grain size of said boron carbide ceramic phase is 3 micrometers or less.

6. A composition as claimed in any one of the preceding claims, wherein said copper metal phase is copper.

7. A composition a claimed in any one of Claims 1 to 6, wherein said copper metal phase is a copper metal alloy having a copper content of greater than 50% by weight, based upon alloy weight.

8. A composition as claimed in any one of the preceding claims, having a microstructure characterized by substantially isolated ceramic structures surrounded by substantially continuous metal.

9. A composition as claimed in any one of Claim 1 to 7, having a microstructure characterized by a substantially continuous ceramic structure surrounding said metal.

10. A composition as claimed in Claim 8 or Claim 9, having a flexure strength within a range of from 350 MPa to 725 MPa and fracture toughness greater than 4.5 MPa·m^{½}.

11. A process for making a densified ceramic-metal composition, comprising:
forming a porous body from a particulate ceramic powder selected from (i) B₄C and (ii) ZrC in an amount sufficient to constitute at least 60 percent by volume of said composition;
contacting said porous body with a metal that is copper or copper alloy having a copper content of greater than 50% by weight, based upon alloy weight;
heating said porous body and metal to a temperature that liquefies said metal but is below the temperature at which said metal wets said ceramic; and
applying pressure to said liquefied metal such that said metal is forced into, and substantially completely fills, the pores of said porous body and said ceramic-metal composition is substantially fully densified.

12. A process as claimed in Claim 11, wherein said ceramic is B₄C.

13. A process as claimed in Claim 12, wherein said B₄C is in particulate form of less than 44 micrometers in size.

14. A process as claimed in any one of Claims 11 to 13, wherein said temperature is within a range of from 1000°C to 1200°C.

15. A process as claimed in any one of Claims 11 to 14, wherein said pressure is at least 200 MPa.

16. A process as claimed in any one of Claims 11 to 15, wherein said porous ceramic body is unfired prior to contacting with said metal.

17. A process as claimed in any one of Claims 11 to 15, wherein said porous ceramic body is sintered prior to contacting with said metal.

## Patentansprüche

1. Verdichtete Keramik-Metall Zusammensetzung, umfassend:
eine Keramikphase, welche (a) (i) B₄C oder (ii) ZrC ist und (b) mindestens 60 Volumenprozent der Zusammensetzung ausmacht, und
eine metallische Kupferphase, welche die Keramikphase durchdringt,
wobei die Zusammensetzung im wesentlichen vollständig verdichtet ist und das Kupfermetall mit der Keramikphase nicht-reaktiv und sie nicht-benetzend ist.

2. Zusammensetzung nach Anspruch 1, wobei die Keramikphase eine Menge in einem Bereich von 70 bis 90 Volumenprozent der Zusammensetzung ausmacht.

3. Zusammensetzung nach Anspruch 1 oder Anspruch 2, wobei die Keramikphase B₄C ist.

4. Zusammensetzung nach Anspruch 3, wobei das B₄C in Teilchenform mit einer Teilchengröße von weniger als 44 Mikrometern vorliegt.

5. Zusammensetzung nach Anspruch 3 oder Anspruch 4, wobei die Korngröße der Borcarbid-Keramikphase 3 Mikrometer oder weniger beträgt.

6. Zusammensetzung nach einem der vorhergehenden Ansprüche, wobei die metallische Kupferphase Kupfer ist.

7. Zusammensetzung nach einem der Ansprüche 1 bis 6, wobei die metallische Kupferphase eine Kupfermetallegierung mit einem Kupfergehalt von mehr als 50 Gew.-% bezogen auf das Legierungsgewicht ist.

8. Zusammensetzung nach einem der vorhergehenden Ansprüche mit einer Mikrostruktur, welche durch im wesentlichen isolierte, von im wesentlichen kontinuierlichem Metall umgebene Keramikstrukturen gekennzeichnet ist.

9. Zusammensetzung nach einem der Ansprüche 1 bis 7 mit einer Mikrostruktur, welche durch eine im wesentlichen kontinuierliche, von dem Metall umgebene Keramikstruktur gekennzeichnet ist.

10. Zusammensetzung nach Anspruch 8 oder Anspruch 9 mit einer Biegefestigkeit in einem Bereich von 350 MPa bis 725 MPa und einer Bruchzähigkeit von mehr als 4,5 MPa·m^{1/2}.

11. Verfahren zum Herstellen einer verdichteten Keramik-Metall Zusammensetzung, umfassend:
Bilden eines porösen Körpers aus einem teilchenförmigen Keramikpulver, ausgewählt aus (i) B₄C oder (ii) ZrC in einer ausreichenden Menge um mindestens 60 Volumenprozent der Zusammensetzung auszumachen,
Inkontaktbringen des porösen Körpers mit einem Metall, welches Kupfer oder eine Kupferlegierung mit einem Kupfergehalt von mehr als 50 Gew.-% bezogen auf das Legierungsgewicht ist,
Erwärmen des porösen Körpers und des Metalls auf eine Temperatur, bei der das Metall verflüssigt wird, aber unterhalb der Temperatur, bei der das Metall die Keramik benetzt, und
Anwenden von Druck auf das verflüssigte Metall, so daß das Metall in die Poren des porösen Körpers gedrückt wird und sie im wesentlichen vollständig füllt und die poröse Keramik-Metall Zusammensetzung im wesentlichen vollständig verdichtet wird.

12. Verfahren nach Anspruch 11, wobei die Keramik B₄C ist.

13. Verfahren nach Anspruch 12, wobei das B₄C in Form von Teilchen mit einer Größe von weniger als 44 Mikrometern vorliegt.

14. Verfahren nach einem der Ansprüche 11 bis 13, wobei die Temperatur in einem Bereich von 1000°C bis 1200°C liegt.

15. Verfahren nach einem der Ansprüche 11 bis 14, wobei der Druck mindestens 200 MPa beträgt.

16. Verfahren nach einem der Ansprüche 11 bis 15, wobei der poröse Keramikkörper vor dem Inkontaktbringen mit dem Metall nicht gebrannt wird.

17. Verfahren nach einem der Ansprüche 11 bis 15, wobei der poröse Keramikkörper vor dem Inkontaktbringen mit dem Metall gesintert wird.

## Revendications

1. Composition céramique-métal densifiée, comprenant:
une phase céramique qui (a) est soit (i) B4C soit (ii) ZrC et qui (b) représente au moins 60 pourcent en volume de ladite composition, et
une phase de cuivre métallique qui imprègne ladite phase céramique,
dans laquelle ladite composition est essentiellement complètement densifiée et ledit cuivre métallique est non réactif et non mouillant vis-à-vis de la phase céramique.

2. Composition selon la revendication 1, dans laquelle ladite phase céramique représente une quantité comprise entre 70 et 90 pourcent en volume de ladite composition.

3. Composition selon l'une des revendications 1 ou 2, dans laquelle ladite phase céramique est B₄C.

4. Composition selon la revendication 3, dans laquelle B₄C se trouve sous forme particulaire ayant une granulométrie inférieure à 44 micromètres.

5. Composition selon l'une des revendications 3 ou 4, dans laquelle la granulométrie de ladite phase céramique de carbure de bore est de 3 micromètres ou moins.

6. Composition selon l'une des revendications précédentes, dans laquelle ladite phase de cuivre métallique est le cuivre.

7. Composition selon l'une des revendications 1 à 6, dans laquelle ladite phase de cuivre métallique est un alliage de cuivre métallique ayant une teneur en cuivre supérieure à 50% en poids, par rapport au poids de l'alliage.

8. Composition selon l'une des revendications précédentes, ayant une microstructure caractérisée par des structures céramiques isolées entourées par du métal essentiellement continu.

9. Composition selon l'une des revendications 1 à 7, ayant une microstructure caractérisée par une structure céramique essentiellement continue entourant ledit métal.

10. Composition selon l'une des revendications 8 ou 9, ayant une résistance à la flexion comprise entre 350 MPa et 725 MPa et une ténacité à la rupture supérieure à 4,5 MPa.m^{1/2}.

11. Procédé pour fabriquer une composition céramique-métal densifiée, comprenant les étapes consistant:
à former un corps poreux à partir d'une poudre céramique particulaire choisie parmi (i) le B₄C et (ii) le ZrC en une quantité suffisante pour représenter au moins 60 pourcent en volume de ladite composition;
à mettre en contact ledit corps poreux avec un métal qui est du cuivre ou un alliage de cuivre ayant une teneur en cuivre supérieure à 50% en poids, par rapport au poids de l'alliage;
à chauffer ledit corps poreux et ledit métal à une température qui liquéfie ledit métal, mais qui est inférieure à la température à laquelle ledit métal mouille ladite céramique; et
à appliquer une pression audit métal liquéfié de façon à obliger ledit métal à pénétrer et à remplir complètement les pores dudit corps poreux et ladite composition céramique-métal est essentiellement complètement densifiée.

12. Procédé selon la revendication 11, dans laquelle ladite céramique est du B₄C.

13. Procédé selon la revendication 12, dans lequel B4C est sous forme de particules de granulométrie inférieure à 44 micromètres.

14. Procédé selon l'une des revendications 11 à 13, dans lequel ladite température est comprise entre 1000°C et 1200°C.

15. Procédé selon l'une des revendications 11 à 14, dans lequel ladite pression est d'au moins 200 MPa.

16. Procédé selon l'une des revendications 11 à 15, dans lequel le corps céramique poreux est à l'état non cuit avant la mise en contact avec ledit métal.

17. Procédé selon l'une des revendications 11 à 15, dans lequel ledit corps céramique poreux est fritté avant la mise en contact avec ledit métal.
